Europäisches Patentamt

European Patent Office

Office européen des brevets

(11) Numéro de publication : **0 322 061 B1**

# (12) FASCICULE DE BREVET EUROPEEN

(45) Date de publication du fascicule du brevet :
**24.08.94 Bulletin 94/34**

(51) Int. Cl.$^5$ : **H04Q 7/04, H04B 7/26**

(21) Numéro de dépôt : **88202946.5**

(22) Date de dépôt : **19.12.88**

(54) **Système radioélectrique pour permettre l'échange d'informations entre un ensemble de stations.**

(30) Priorité : **23.12.87 FR 8718048**

(43) Date de publication de la demande :
**28.06.89 Bulletin 89/26**

(45) Mention de la délivrance du brevet :
**24.08.94 Bulletin 94/34**

(84) Etats contractants désignés :
**DE FR GB IT SE**

(56) Documents cités :
**EP-A- 0 036 146**
**EP-A- 0 069 275**
**EP-A- 0 145 098**
**FR-A- 2 376 570**
**GB-A- 1 591 159**
**COMMUTATION & TRANSMISSION, vol. 8, no. 1, 1986, pages 19-30, Paris, FR; G. BANQUET et al.: "Ramage, un réseau radiotéléphonique mobile privé"**

(56) Documents cités :
**THE 36TH IEEE VEHICULAR TECHNOLOGY CONFERENCE, 20-22 mai 1986, Dallas, pages 334-341, New York, US; K. IMAMURA et al.: "Mobile communication control using multi-transmitter simul/sequential casting (MSSC)"**

(73) Titulaire : **TRT TELECOMMUNICATIONS RADIOELECTRIQUES ET TELEPHONIQUES**
**88 rue Brillat Savarin**
**F-75013 Paris (FR)**
(84) **FR**
Titulaire : **N.V. Philips' Gloeilampenfabrieken**
**Groenewoudseweg 1**
**NL-5621 BA Eindhoven (NL)**
(84) **DE GB IT SE**

(72) Inventeur : **Leclerc, Daniel-Marie Société Civile S.P.I.D.**
**209, rue de l'Université**
**F-75007 Paris (FR)**

(74) Mandataire : **Chaffraix, Jean et al**
**Société Civile S.P.I.D.**
**156, Boulevard Haussmann**
**F-75008 Paris (FR)**

## Description

La présente invention concerne un système radioélectrique pour permettre l'échange d'informations entre un ensemble de stations-relais et des stations d'accès pour des communications, système utilisant au moins un canal sémaphore commun qui est prévu notamment pour établir les relations entre stations-relais et stations d'accès et dans lequel les stations-relais peuvent émettre une première marque en des premiers instants déterminés tandis que les stations d'accès comportent des moyens pour se brancher en ces instants déterminés sur ledit canal.

La présente invention concerne aussi une station d'accès convenant pour un tel système.

Un tel dispositif est connu du brevet britannique GB 1 591 159. Dans ce système, les marques sont constituées par des tonalités : une première pour signifier que la station-relais qui l'émet veut envoyer un message aux stations d'accès qui la captent et une deuxième pour signifier que la station-relais qui l'émet n'a pas de message à diffuser. Ainsi, si une station d'accès reçoit plusieurs tonalités de différentes stations-relais, le dispositif ne sera sensible à la première tonalité que si son niveau est supérieur aux deuxièmes tonalités reçues.

Ce système connu présente un premier inconvénient dû au fait qu'il est mal adapté aux réseaux utilisant un canal sémaphore transmettant des informations de type numérique, comme c'est le cas du réseau RAMAGE. Ce réseau est décrit dans l'article : "RAMAGE -a private mobile radiotelephone network" de G.Banquet, J.P.Pittion, M.Coudreuse et publié dans "Communications engineering International, September 1986".

Un des buts de l'invention est de fournir un système radioélectrique pouvant convenir à un réseau RAMAGE. Pour cela, conformément à l'invention, un système du genre mentionné dans le préambule est remarquable en ce que les statons-relais comportent des moyens de marquage pour former un code affecté à chacune d'entre elles (M(R1) - M(R2) - M(R3)) et pour constituer ladite première marque tandis que les stations d'accès comportent des moyens d'analyse (60) des premiers instants pour essayer de récupérer un code numérique afin d'établir une relation selon un premier critère.

Un autre but de l'invention est de fournir un système radioélectrique utilisant plusieurs critères pour établir la relation station d'accès-station-relais. Pour cela, conformément à l'invention, un système du genre mentionné dans le préambule pour lequel un canal sémaphore est utilisé pour transmettre en des seconds instants déterminés, dont chacun est affecté à un relais une deuxième marque sous forme numérique, est remarquable, selon une caractéristique de l'invention, en ce que les station d'accès comportent des moyens d'analyse (60) des deuxièmes instants pour déterminer la qualité des différentes marques afin d'établir une relation selon un deuxième critère.

La description suivante, accompagnée des dessins ci-annexés, le tout donné à titre d'exemple non limitatif, fera bien comprendre comment l'invention peut être réalisée.

La figure 1 montre une répartition schématique de différentes stations du système de l'invention.

La figure 2 montre l'organisation du canal sémaphore utilisé par le système de l'invention.

La figure 3 montre de façon schématique, la structure d'une station d'accès.

Les figures 4a et 4b montrent l'ordinogramme régissant le fonctionnement de la station d'accès.

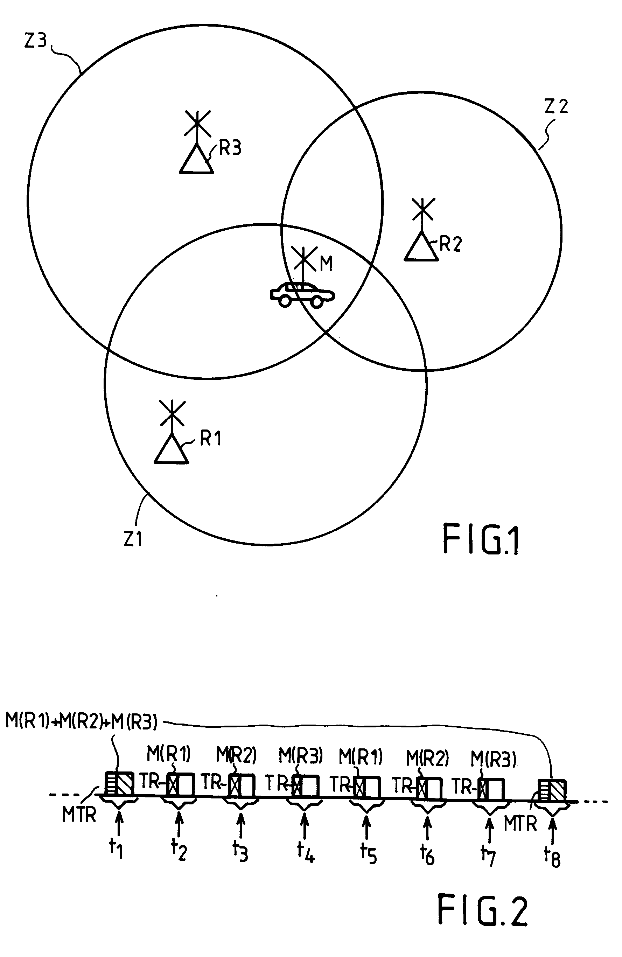

A la figure 1, les références R1, R2, et R3 montrent l'emplacement de différentes stations-relais. Ces différentes stations-relais R1, R2 et R3 peuvent être captées à l'intérieur de zones Z1, Z2, Z3. Une station d'accès M montée par exemple à bord d'une automobile, se déplace à l'intérieur de ces zones et l'on peut établir une communication entre cette station M et une autre station d'accès (non représentée) en se servant des stations-relais. Le problème qui se pose consiste donc, tout d'abord, pour la station M à se raccorder sur l'une des stations-relais R1, R2 ou R3. Pour cela, on utilise un canal sémaphore dont l'organisation est montrée à la figure 2. Sur cette figure on a distingué des instants repérés par t1, t2, t3... t8. Aux instants t2, t3, t4, t5, t6, t7 les différentes stations-relais émettent une marque les caractérisant. Ainsi aux instants t2 et t5 la station-relais R1 émet un code M(R1) comprenant son code d'identification accompagné d'un code détecteur d'erreur. De la même manière, la station R2 émettra en des instants t3 et t6 un code M(R2) tandis que la station R3 émettra dans les instants t4 et t7 un code M(R3). En des instants t1 et t8 toutes les stations émettent leurs codes c'est-à-dire que l'on a la superposition de ces différents codes, ce qui est noté par M(R1)+M(R2)+M(R3). Ainsi la reconnaissance d'une seule de ces marques au niveau des récepteurs des stations d'accès indique que celle-ci détermine la station-relais la mieux reçue. On a noté aussi par TR et MTR les codes de trames et de multitrame nécessaires pour avoir une bonne synchronisation du système.

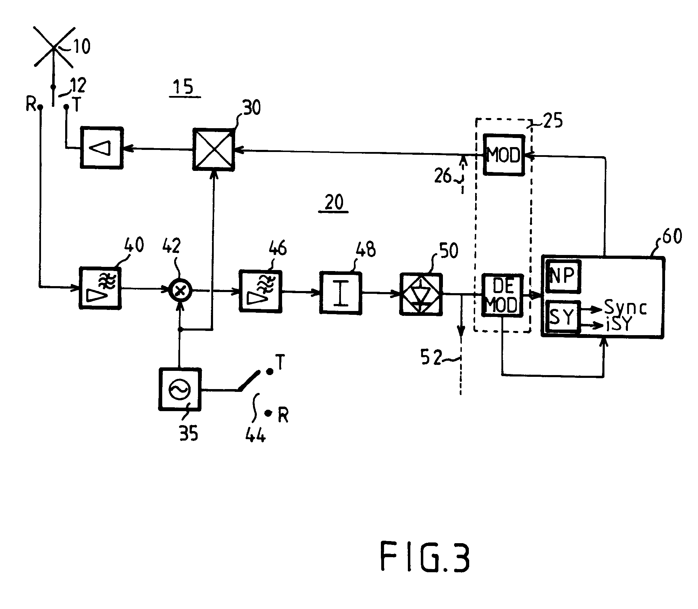

La figure 3 montre, en partie, la structure d'une station d'accès. Les parties non montrées ne sont pas nécessaires pour la compréhension de l'invention.

La référence 10 sur cette figure 3 montre l'antenne de la station. Cette antenne est utilisée tant en émission qu'en réception. Un relais d'antenne 12 à deux positions R et T permet de brancher cette antenne 10 soit sur une branche d'émission 15, le relais étant en position T soit sur une branche de réception 20, le relais étant alors en position R. Un circuit modem 25 est utilisé pour recevoir et émettre des données numériques transmises notamment dans le canal sémaphore. La partie modulation MOD de ce modem 25 est reliée à l'entrée de la branche d'émission 15 tout comme le circuit phonique (ceci est représenté par la flèche en pointillés 26). Un modulateur 30 donne une porteuse à ses signaux d'entrée ; la porteuse provient d'un oscillateur local qui est aussi utilisé par la branche de réception 20. Un amplificateur haute-fréquence 40 fournit le niveau requis à l'antenne pour l'émission. La branche réception 20 comporte tout d'abord un étage de préamplification 40 pour amplifier les signaux provenant de l'antenne 10, un étage de changement de fréquence 42 est relié en sortie de l'étage 42. Cet étage de changement de fréquence utilise aussi l'oscillateur local 35. Il est à noter que sa fréquence doit changer selon que l'on est en émission ou en réception. Ce changement est symbolisé par le contacteur 44 à deux positions R et T manoeuvré en même temps que le relais d'antenne 12. Ainsi la fréquence du signal de sortie varie non seulement de l'écart du duplex mais en plus de la valeur de la fréquence intermédiaire. A la sortie de l'étage 20, on trouve donc un étage amplificateur 46 à fréquence intermédiaire, suivi d'un limiteur de niveau 48. Un discriminateur de fréquence 50 faisant suite fournit, d'une part des informations à la partie démodulation DEMOD du modem 25 et d'autre part des signaux de parole à la partie phonique. Ceci est représenté par une flèche en pointillés 52. Les informations pour établir la relation entre station d'accès-station-relais sont gérées et élaborées par un ensemble à microprocesseur 60. Dans cet ensemble, on a distingué une partie de synchronisation Sy qui fournit, en fonction des codes TR et MTR reconnus, des signaux iSY donnant en fonction du temps le numéro des emplacements temporels attendus des marques venant des différentes stations-relais. Cette partie Sy fournit aussi un signal Sync indiquant que la synchronisation sur le canal sémaphore est retenue.

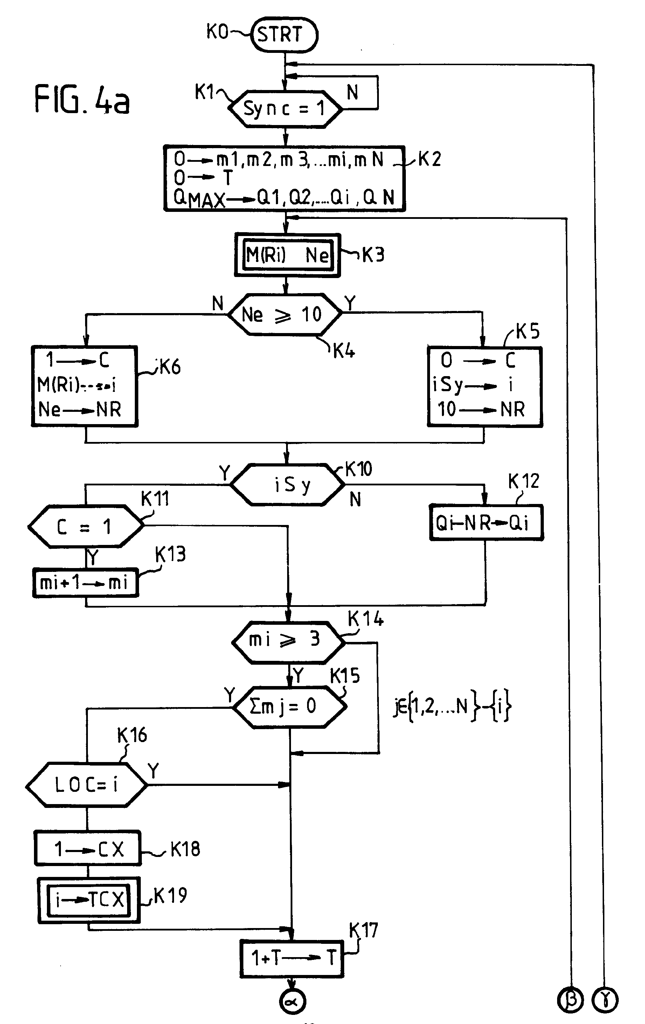

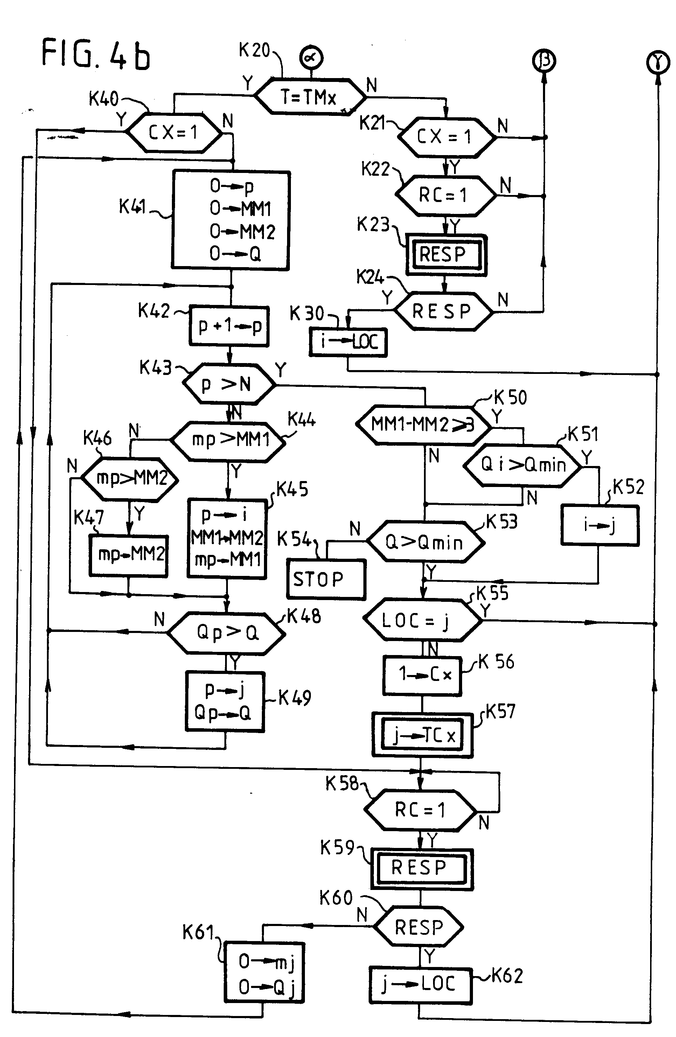

On explique maintenant le fonctionnement de l'ensemble 60 à l'aide des ordinogrammes montrés aux figures 4a et 4b.

L'ordinogramme de la figure 4a commence par une case K0 indiquant le début du déroulement du programme de fonctionnement que l'on va décrire. La case K1 suivante indique un test sur la valeur du signal Sync. La valeur "1" indique que la synchronisation est obtenue et l'on passe alors à la case K2. On effectue ce test tant que la valeur Sync n'est pas égale à 1. La case K2 représente la phase d'initialisation du programme. On met à zéro différents compteurs $m_1$, $m_2$,... $m_i$,... $m_N$, chacun d'eux étant affecté à un relais et N représente donc le nombre de stations-relais considérées. On met aussi à zéro un compteur T. Ce compteur T s'incrémente sur les trames pendant lesquelles le récepteur M compare la qualité de réception des marques reçues des différentes stations R1, R2,... RN. Différents emplacements mémoires Q1,

Q2,... $Q_i$, $Q_N$, chacun d'eux étant affecté à une des N stations relais est initialisé par une valeur maximale QMAX. La case K3, qui suit, consiste en une analyse de la marque d'une station-relais qui vient d'être reçue. Cette analyse, ne faisant pas partie de l'invention, ne sera pas décrite et est explicitée dans la version française de l'article mentionné ci-dessus : voir COMMUTATION ET TRANSMISSION, N°1 de 1986. Cette analyse fournit un nombre Ne indiquant le nombre d'erreurs détecté sur le code M(Ri) transmettant l'identification d'une des stations-relais. Ce nombre Ne est testé à la case K4. Un nombre d'erreurs supérieur à 10 ou une non-réception correcte de $M(R_i)$ permet de passer à la case K5. Comme la reconnaissance de M(Ri) n'a pas été bonne, on met à "0" un indicateur C et le numéro du relais "i" détecté est déterminé par le signal iSy et non par le code M(Ri), et l'on met à 10 dans un emplacement mémoire NR. Si le Ne est inférieur à 10, on va à la case K6 ; on met ici l'indicateur C à "1" et le numéro du relais "i" est déterminé par la reconnaissance de la marque M(Ri), le nombre d'erreurs Ne est emmagasiné dans la mémoire NR. Des cases K5 ou K6, on va à la case K10 où l'on examine l'information iSy pour savoir si l'on a affaire aux instants (t1, t8,...) où toutes les marques des stations-relais sont transmises en même temps ; si c'est le cas, on va à la case K11, si ce n'est pas le cas à la case K12.

A la case K11, on effectue un test sur l'indicateur C ; si celui-ci indique que la marque M(Ri) a été reçue dans de bonnes conditions, on incrémente le compteur $m_i$ qui lui est imparti (case K13). Si la marque a été mal reçue, on passe à la case K14. La case K12 est donc relative aux cas où une marque a été reconnue en dehors des instants où toutes les marques sont transmises simultanément. A cette case K12 on effectue une correction de la qualité du signal c'est-à-dire que cette qualité décroît du nombre d'erreurs fourni lors de la procédure de la case K3. A la case K14, on examine le compteur $m_i$ relatif à la marque, déterminée à la case K5 ou K6 ; si le contenu du compteur $m_i$ est supérieur ou égal à 3, on examine alors, (voir case K15), le contenu des autres compteurs $m_j$ contenant les autres stations-relais (c'est-à-dire que j peut prendre toutes les valeurs de 1 à N sauf la valeur i). Si les tests relatifs au "i" donné et effectués aux cases K14 Et K15 se révèlent positifs, on examine alors (voir case K16) si la station d'accès ne serait pas déjà en relation avec la station Ri ; ceci est indiqué par le contenu d'une mémoire LOC. Si on est déjà en relation avec la station Ri, on passe à la case K17 ; sinon, on passe aux cases K18 et K19 où l'on démarre une procédure de mise en relation. Cette procédure commence par la mise à l'état "1" d'un indicateur CX (case K18) et l'on demande (case K19) à la station-relais, avec laquelle la station d'accès est en relation, de démarrer le processus de mise en relation avec la station Ri ; ceci effectué, on passe à la case K17 où l'on incrémente le compteur T. Le contenu de ce compteur est comparé avec une valeur limite TMX (case K20, figure 4b). Si la valeur maximale n'est pas atteinte, on passe à la case K21. Ici, on teste l'indicateur CX. Si aucune demande de relation n'a été formulée on revient à la case K3. Si une demande de relation a été formulée on passe à la case K22 où l'on teste un indicateur RC indiquant si une réponse est parvenue ; si le test est négatif on revient à la case K3. La case K23 qui suit est une procédure de décodage de la réponse ; si celle-ci est positive on va à la case K30 où la relation sur la station Ri devient effective. Lorsque le contenu du compteur a atteint sa valeur maximale TMX, on teste là aussi, case K40, si on a fait une demande de relation. Si ce n'est pas le cas, on initialise, case K41 une boucle de recherche des relais $R_i$ que l'on reçoit le mieux. Pour cela on met à zéro un indice p, la mémoire MM1 dans laquelle on mettra la valeur maximale des contenus des mémoires $m_i$, la mémoire MM2 dans laquelle on mettra la valeur immédiatement inférieure à la valeur maximale précédente, valeur prise dans les contenus de mémoire $m_i$ et enfin la mémoire Q dans laquelle on mettra la valeur maximale des contenus des mémoires $Q_i$. La recherche de ces trois valeurs s'effectue dans la boucle incluant les cases K42 à K49.

La case K42 correspond à l'incrémentation de l'indice p utilisé dans cette boucle. La case K43 fait sortir de la boucle lorsque l'indice p est supérieure à N, N étant le nombre de relais. Les cases K44 à K47 explicitent la recherche des valeurs MM1 et MM2 précédemment expliquées ; dans la case K45, on mémorise également la valeur de l'indice p pour laquelle la valeur $m_p$ est maximale. De la même façon les cases K48 et K49 effectuent la recherche de la valeur maximale contenue dans les compteurs $Q_i$, ainsi que de l'indice p pour lequel cette valeur maximale est obtenue.

Lorsque la recherche est terminée par le test de la case K43, on part à la case K50 où l'on teste si l'écart entre les valeurs $MM_1$ et $MM_2$ est supérieur ou égal à 3. Si c'est le cas, on teste case K51 si la note $Q_i$, de même indice que $m_j$ contenu dans $MM_1$, est supérieure à une valeur minimale $Q_{min}$. Si c'est le cas on retient case K52 la valeur de l'indice afin d'effectuer une tentative de relation sur le relais correspondant. Dans le cas contraire on teste, case K53, si la valeur Q est supérieure à $Q_{min}$. Si ce n'est pas le cas, on s'oriente sur la case K54 et l'on stoppe le programme en laissant, par exemple, à l'utilisateur le soin de relancer d'autres tentatives. Si Q est supérieur à $Q_{min}$, on s'oriente vers la case K55.

Case K55, on examine si l'on est déjà en relation avec le relais $R_j$. Si c'est le cas, on retourne en K1. Sinon, case K56 on met à 1 l'indicateur CX puis, case K57, on effectue sur le relais $R_j$ la même procédure qu'indiquée à la case K10. Pui on va à la case K58 qui est, finalement, une phase d'attente. Cette case K58 vient aussi après la case K40 déjà décrite, et concerne le cas où le test sur CX est positif. Lorsque la réponse revient (case K59) elle est testée (case K60) ; si elle est positive, on se connecte sur la station-relais ainsi déterminée, case K62, puis on retourne en K1.

Si la réponse est négative, on va procéder au choix d'une autre station-relais ; pour cela on commence par éliminer du choix le relais dont on vient d'avoir une réponse négative en mettant à zéro, case K61, les valeurs $m_j$ et $Q_j$ qui lui correspondent et on retourne en K41.

La demanderesse a choisi pour un fonctionnement convenable du système les paramètres suivants.

La multitrame comportant une marque commune contient q fois la séquence de trame des différentes marques de chacune des N stations-relais.

$$QMAX = 80q$$
$$Q_{min} = 20q$$
$$TMAX = 8(Nq + 1)$$

Bien qu'on ait décrit la présente invention avec un ordinogramme montrant une préférence pour que le premier critère soit satisfait en premier lieu, c'est-à-dire le critère basé sur la reconnaissance des marques, il va de soi que sans sortir du cadre de l'invention on peut aussi satisfaire tout d'abord le second critère, c'est-à-dire le critère basé sur la qualité de transmission des marques. Ceci peut être effectué en inversant l'ordre des tests K50 et K53.

## Revendications

1. Système radioélectrique (R1-R2-R3-M) pour permettre l'échange d'informations entre un ensemble de stations-relais (R1-R2-R3) et des stations d'accès (M) pour des communications, système utilisant au moins un canal sémaphore commun qui est prévu notamment pour établir les relations (ou liaisons) entre stations-relais et stations d'accès et dans lequel les stations-relais peuvent émettre une première marque en des premiers instants (t1, t8) déterminés tandis que les stations d'accès comportent des moyens (12-44-60) pour se brancher en ces instants déterminés sur ledit canal, caractérisé en ce que les statons-relais comportent des moyens de marquage pour former un code affecté à chacune d'entre elles (M(R1) - M(R2) - M(R3)) et pour constituer ladite première marque tandis que les stations d'accès comportent des moyens d'analyse (60) des premiers instants pour essayer de récupérer un code numérique afin d'établir une relation selon un premier critère.

2. Système radioélectrique selon la revendication 1 pour lequel le canal sémaphore est utilisé pour transmettre en des seconds instants déterminés (t2, t3, t4, t5, t6, t7), dont chacun est affecté à un relais, une deuxième marque (M) sous forme numérique, caractérisé en ce que les station d'accès comportent des moyens d'analyse (60) des deuxièmes instants pour déterminer la qualité des différentes marques afin d'établir une relation selon un deuxième critère.

3. Système radioélectrique selon la revendication 2, caractérisé en ce que la relation est établie d'abord en cherchant à satisfaire le premier critère avant le second.

4. Système radioélectrique selon la revendication 2, caractérisé en ce que la relation est établie d'abord en cherchant à satisfaire le second critère avant le premier.

5. Station d'accès convenant à un système selon l'une des revendications 1 à 4 comportant des moyens d'utilisation d'un canal sémaphore commun qui est prévu notamment pour établir les relations entre stations-relais et les stations d'accès, coopérant avec des stations-relais qui comportent des moyens de marquage pour former un code affecté à chacune d'entre elles (M(R1) - M(R2) - M(R3)) destiné à être transmis en des premiers instants par ledit canal sémaphore et pour constituer une première marque, caractérisée en ce qu'elle comporte des moyens d'analyse (60) des premiers instants pour essayer de récupérer un code numérique afin d'établir une relation selon un premier critère.

6. Station d'accès selon la revendication 5, coopérant avec des stations-relais qui comportent des moyens de marquage pour former un code affecté à chacune d'entre elles (M(R1) - M(R2) - M(R3)) destiné à être transmis par ledit canal sémaphore en des deuxièmes instants dont chacun est affecté à une station-relais et pour constituer une deuxième marque, caractérisée en ce qu'elle comporte des moyens d'analyse (60) des deuxièmes instants pour déterminer la qualité des différentes marques afin d'établir une relation selon un deuxième critère.

7. Station-relais convenant à un système selon l'une des revendications 1 à 4 comportant des moyens d'utilisation d'un canal sémaphore commun qui est prévu notamment pour établir les relations entre stations-relais et les stations d'accès système, caractérisée en ce qu'elle comporte des moyens de marquage coopérant avec lesdits moyens d'utilisation pour former un code affecté à chacune d'entre elles (M(R1) - M(R2) - M(R3)) destiné à être transmis par ledit canal sémaphore et pour constituer une première marque.

8. Station-relais selon la revendication 7, caractérisée en ce qu'elle comporte des moyens de marquage coopérant avec lesdits moyens d'utilisation pour former un code affecté à chacune d'entre elles (M(R1) - M(R2) - M(R3)) destiné à être transmis, par ledit canal sémaphore, en des deuxièmes instants dont chacun est affecté à une station-relais et pour constituer une deuxième marque tandis que les stations d'accès comportent des moyens d'analyse (60) des deuxièmes instants pour déterminer la qualité des différentes marques afin d'établir une relation selon un deuxième critère.

**Patentansprüche**

1. Funksystem (R1 - R2 - R3 - M), das den Nachrichtenaustausch zwischen einer Anzahl Relaisstationen (R1, R2, R3) und Zugangsstationen (M) zum Zwecke der Kommunikation gestattet, wobei das Systems mindestens einen gemeinsamen Signalisierungskanal benutzt, der insbesondere vorgesehen ist, um die Verbindungen zwischen Relaisstationen und Zugangsstationen aufzubauen und auf dem die Relaisstationen zu bestimmten ersten Zeitpunkten ($t_1$, $t_8$) ein erstes Kennzeichen aussenden können, während die Zugangsstationen mit Mitteln (12, 44, 60) versehen sind, um sich zu diesen bestimmten Zeitpunkten auf den Kanal aufzuschalten, dadurch gekennzeichnet, daß die Relaisstationen mit Kennzeichnungsmitteln ausgerüstet sind, um jeder von ihnen einen Code (M(R1) - M(R2) - M(R3)) zuzuordnen und damit die erste Kennzeichnung vorzunehmen, während die Zugangsstationen mit Analysemitteln (60) für die ersten Zeitpunkte ausgerüstet sind, um zu versuchen, den digitalen Code wiederherzustellen, um damit entsprechend einem ersten Kriterium eine Verbindung aufzubauen.

2. Funksystem nach Anspruch 1, in dem ein Signalisierungskanal benutzt wird, um zu bestimmten zweiten Zeitpunkten ($t_2$, $t_3$, $t_4$, $t_5$, $t_6$, $t_7$), die jeweils einer Relaisstation zugeordnet sind, eine zweite Kennzeichnung (M) in digitaler Form zu übertragen, dadurch gekennzeichnet, daß die Zugangsstationen Analysemittel (60) für die zweiten Zeitpunkte enthalten, um die Güte der verschiedenen Kennzeichnungen zu ermitteln und um damit entsprechend einem zweiten Kriterium eine Verbindung aufzubauen.

3. Funksystem nach Anspruch 2, dadurch gekennzeichnet, daß versucht wird, eine Verbindung zunächst unter Erfüllung des ersten Kriteriums aufzubauen, bevor das zweite Kriterium erfüllt wird.

4. Funksystem nach Anspruch 2, dadurch gekennzeichnet, daß versucht wird, eine Verbindung zunächst unter Erfüllung des zweiten Kriteriums aufzubauen, bevor das erste Kriterium erfüllt wird.

5. Zugangsstation für ein Funksystem nach einem der Ansprüche 1 bis 4, die Benutzungsmöglichkeiten für einen gemeinsamen Signalisierungskanal enthält, der insbesondere vorgesehen ist, um die Verbindungen zwischen Relaisstationen und Zugangsstationen herzustellen, und die mit Relaisstationen zusammenarbeitet, die ihrerseits mit Kennzeichnungsmitteln ausgerüstet sind, um jeder von ihnen einen Code zuzuordnen (M(R1) - M(R2) - M(R3)), der seinerseits über den Signalisierungskanals zu ersten Zeitpunkten übertragen wird und damit eine erste Kennzeichnung darstellt, dadurch gekennzeichnet, daß die Zugangsstation mit Analysemitteln (60) für die ersten Zeitpunkte ausgerüstet ist, um zu versuchen, den digitalen Code wiederherzustellen, um damit entsprechend einem ersten Kriterium eine Verbindung aufzubauen.

6. Zugangsstation für ein Funksystem nach Anspruch 5, die mit Relaisstationen zusammenarbeitet, die ihrerseits mit Kennzeichnungsmitteln ausgerüstet sind, um jeder von ihnen einen Code zuzuordnen (M(R1) - M(R2) - M(R3)), der seinerseits über den Signalisierungskanals zu zweiten Zeitpunkten, die jeweils einer Relaisstation zugeordnet sind, übertragen wird und damit eine zweite Kennzeichnung darstellt, dadurch gekennzeichnet, daß die Zugangsstation mit Analysemitteln (60) für die zweiten Zeitpunkte ausgerüstet ist, um die Güte der verschiedenen Kennzeichen zu bestimmen und um damit entsprechend einem zweiten Kriterium eine Verbindung aufzubauen.

7. Relaisstation für ein Funksystem nach einem der Ansprüche 1 bis 4, die Benutzungsmöglichkeiten für einen gemeinsamen Signalisierungskanal enthält, der insbesondere vorgesehen ist, um die Verbindungen zwischen Relaisstationen und den System-Zugangsstationen herzustellen, dadurch gekennzeichnet, daß die Relaisstation mit Kennzeichnungsmitteln ausgerüstet ist, die mit den Benutzungsmöglichkeiten zusammenwirken, um jeder von ihnen einen Code zuzuordnen (M(R1) - M(R2) - M(R3)), der seinerseits über den Signalisierungskanal übertragen wird und damit eine erste Kennzeichnung darstellt.

8. Relaisstation nach Anspruch 7, dadurch gekennzeichnet, daß sie mit Kennzeichnungsmitteln ausgerüstet ist, die mit den Benutzungsmöglichkeiten zusammenwirken, um jeder von ihnen einen Code zuzuordnen (M(R1) - M(R2) - M(R3)), der seinerseits über den Signalisierungskanal zu zweiten Zeitpunkten, die jeweils einer Relaisstation zugeordnet sind, übertragen wird und damit eine zweite Kennzeichnung darstellt, während die Zugangsstationen mit Analysemitteln (60) für die zweiten Zeitpunkte ausgerüstet sind, um die Güte der verschiedenen Kennzeichen zu bestimmen und um damit entsprechend einem zweiten Kriterium eine Verbindung aufzubauen.

## Claims

1. Radio system (R1-R2-R3) for allowing for exchanging messages between a set of relay stations (R1-R2-R3) and access stations (M) for communications, the system using at least one common semaphore channel which is specifically provided to establish connections or links between relay stations and access stations and through which the relay stations can transmit a first code signal at first predetermined instants (t1, t8), whereas the access stations comprise means (12-44-60) for tapping said channel at these predetermined instants, characterized in that the relay stations comprise coding means for forming a code assigned to each of the relay stations (M(R1)-M(R2)-M(R3)) and for forming said first code signal, while the access stations comprise first-instant analysis means (60) to try and recover a digital code for establishing a connection according to a first criterion.

2. Radio system as claimed in Claim 1, for which the semaphore channel is used for transmitting at predetermined second instants (t2, t3, t4, t5, t6, t7) of which each one is assigned to a relay station, a second code signal (M) in a digital form, characterized in that the access stations comprise second-instant analysis means (60) to determine the quality of the various code signals for establishing a connection according to a second criterion.

3. Radio system as claimed in Claim 2, characterized in that the connection is established initially by trying to satisfy the first criterion before the second criterion.

4. Radio system as claimed in Claim 2, characterized in that the connection is established initially by trying to satisfy the second criterion before the first criterion.

5. Access station suitable for use in a system as claimed in one of the Claims 1 to 4, comprising means for using a common semaphore channel particularly provided for establishing connections between relay stations and the access stations, cooperating with relay stations that comprise coding means for forming a code assigned to each of the relay stations (M(R1)-M(R2)-M(R3)), this code being intended to be transmitted through said semaphore channel at first instants and to form a first code signal, characterized in that the access station comprises first-instant analysis means (60) to try and recover a digital code for establishing a connection according to a first criterion.

6. Access station as claimed in Claim 5, cooperating with relay stations that comprise coding means for forming a code assigned to each of the relay stations (M(R1)-M(R2)-M(R3)), this code being intended to be transmitted through said semaphore channel at second instants of which each instant is assigned to a relay station and to form a second code signal, characterized in that the access station comprises second-instant analysis means (60) to determine the quality of the various code signals for establishing a connection according to a second criterion.

7. Relay station suitable for use in a system as claimed in one of the Claims 1 to 4, comprising means for using a common semaphore channel particularly provided for establishing connections between relay stations and the access stations, characterized in that the relay station comprises coding means cooperating with said means for using the semaphore channel to form a code assigned to each of the relay stations (M(R1)-M(R2)-M(R3)), this code being intended to be transmitted through said semaphore channel and to form a first code signal.

8. Relay station as claimed in Claim 7, characterized in that it comprises coding means cooperating with said means for using the semaphore channel to form a code assigned to each of the relay stations (M(R1)-M(R2)-M(R3)), this code being intended to be transmitted through said semaphore channel at second instants of which each instant is assigned to a relay station and to form a second code signal while the access stations comprise second-instant analysis means (60) to determine the quality of the various code signals for establishing a connection according to a second criterion.

FIG.1

FIG.2

FIG.3

# FIG. 4a

FIG. 4b